# FASCICULE DE BREVET EUROPEEN

(11) **EP 1 645 901 B1**
(45) Date de publication et mention de la délivrance du brevet: **01.04.2009**
(21) Numéro de dépôt: 05292015.4
(22) Date de dépôt: 28.09.2005
(51) Int. Cl.: G02B 23/02, G01S 3/786, G01C 21/00

(54) **Système optique à pointage variable et procédé mettant en oeuvre un tel systeme**
Optisches System zur variablen Richtungsanzeige und Verfahren zu dessen Umsetzung
Optical device for pointing in variable directions and method for implementing it

(30) Priorité: 07.10.2004 FR 0410602
(43) Date de publication de la demande: 12.04.2006
(73) Titulaire: EADS ASTRIUM SAS, 31402 Toulouse Cedex 4 (FR)
(72) Inventeur: Pasternak, Frédérick, 31590 Gaure (FR); Safa, Frédéric, 31400 Toulouse (FR)
(74) Mandataire: Boire, Philippe Maxime Charles

(56) Documents cités:
- FR-A- 2 835 621
- GB-A- 2 344 951
- US-A- 4 159 419

## Description

La présente invention concerne un système optique à pointage variable, ainsi qu'un procédé mettant en oeuvre un tel système.

Le repérage de la direction d'observation d'un système optique est nécessaire dans de nombreuses applications, telles que, par exemple, une cartographie du ciel, une observation terrestre effectuée depuis un satellite, notamment à but d'étude météorologique, l'établissement d'une liaison de transmission optique avec un satellite, etc.

Des dispositifs de repérage de la direction d'observation d'un système optique existent déjà. Les demandes de brevets français 2 713 785 et 2 724 013 divulguent de tels dispositifs qui comprennent une source lumineuse et un détecteur associé à celle-ci. Dans ces dispositifs, un signal lumineux se déplace sur le détecteur en fonction de l'orientation du système d'observation. Ces dispositifs sont complexes, notamment à cause de la source lumineuse qui nécessite une alimentation en énergie adaptée, et à cause d'éléments d'optique supplémentaires qu'ils incorporent. Ils sont aussi encombrants, notamment parce qu'ils sont externes au système d'observation. Enfin, pour ces dispositifs, des variations des positions relatives de la source lumineuse et/ou du détecteur lumineux d'une part, et du système d'observation d'autre part, provoquent des erreurs dans la détermination de la direction d'observation. De telles variations de positions sont dues, notamment, à des déformations ou à des dilations thermiques des supports du détecteur, de la source lumineuse et/ou du système d'observation.

D'autres télescopes sont connus à partir des documents US 4,159,419 et FR 2 835 621.

Un but de la présente invention est de permettre une détermination de la direction d'observation d'un système optique qui soit exacte et précise, tout en ne nécessitant pas d'équipements complexes ni encombrants.

Pour cela, l'invention propose un système optique à pointage variable qui comprend un télescope et un dispositif de pointage principal permettant de sélectionner des rayons lumineux provenant d'une direction d'observation déterminée pour entrer dans le télescope. Le dispositif de pointage principal comprend un miroir de pointage principal disposé devant l'entrée du télescope et orientable, la direction d'observation étant sélectionnée en orientant le miroir de pointage principal de façon à réfléchir des rayons lumineux provenant de la direction d'observation vers l'entrée du télescope. Le système comprend aussi au moins un dispositif de pointage secondaire disposé devant une partie de l'entrée du télescope et orienté de façon fixe par rapport au dispositif de pointage principal. Le dispositif de pointage secondaire est orienté en outre de sorte que des rayons dirigés par celui-ci vers l'entrée du télescope proviennent d'une direction distincte de la direction d'observation. Le système comprend encore au moins un ensemble de photodétecteurs disposé pour enregistrer une image formée par une partie au moins du télescope à partir de rayons lumineux dirigés par le dispositif de pointage secondaire vers l'entrée du télescope.

Le système est caractérisé en ce que le dispositif de pointage secondaire est rigidement couplé au miroir de pointage principal de façon à suivre celui-ci lors d'un changement de direction d'observation.

Dans un système optique selon l'invention, les rayons lumineux dirigés par le dispositif de pointage secondaire vers l'entrée du télescope forment une image secondaire d'objets qui peuvent servir de références pour déterminer la direction d'observation. Cette image secondaire est saisie par l'ensemble de photodétecteurs. Elle est distincte de l'image principale formée par les rayons sélectionnés par le dispositif de pointage principal, et qui correspondent à la direction d'observation. L'image secondaire permet de déterminer la direction d'observation grâce au fait que le dispositif de pointage secondaire est orienté de façon fixe par rapport au dispositif de pointage principal. La direction de provenance des rayons formant l'image secondaire est donc connue en fonction de la direction d'observation du système optique.

La lumière qui est utilisée pour repérer la direction d'observation provient d'objets externes au système optique, ce qui rend le système particulièrement simple. En particulier, aucune source lumineuse supplémentaire n'est nécessaire.

L'ensemble de photodétecteurs peut comprendre une matrice de photodétecteurs, répartis selon deux directions perpendiculaires d'une portion de surface photosensible plane, par exemple.

En outre, le système est peu encombrant du fait qu'une partie au moins du télescope participe simultanément à la formation de l'image principale correspondant à la direction d'observation, et à la formation de l'image secondaire utilisée pour repérer la direction d'observation.

Un système selon l'invention est donc particulièrement adapté pour une utilisation à bord d'un satellite, étant donné qu'il est simple, léger, peu encombrant et sans consommation énergétique excessive.

Le dispositif de pointage secondaire peut être disposé à proximité du dispositif de pointage principal ou de l'entrée du télescope. La détermination de la direction d'observation n'est alors pas, ou bien très peu, sujette à une erreur causée par des déformations ou des dilatations de supports du télescope et/ou du dispositif de pointage secondaire.

En outre, l'absence de mécanismes mobiles entre les dispositifs de pointage principal et secondaire permet d'obtenir une précision supérieure dans la détermination de la direction d'observation.

Un avantage d'un système optique selon l'invention provient du fait que la précision de détermination de la direction d'observation peut être indépendante de la nature de l'objet visé dans la direction d'observation. En effet, la direction d'observation peut n'être déterminée qu'à partir d'objets émettant de la lumière selon une direction distincte de la direction d'observation. Il est donc ainsi possible d'observer un objet peu lumineux ou mobile comme, par exemple, des nuages sur la Terre vus depuis un satellite, tout en bénéficiant simultanément d'une détermination précise de la direction d'observation. En effet, celle-ci peut être déterminée à partir de lumière émise par des étoiles et dirigée vers l'entrée du télescope par le dispositif de pointage secondaire.

La direction de provenance des rayons dirigés par le dispositif de pointage secondaire vers l'entrée du télescope et la direction d'observation sont de préférence séparées d'un angle suffisant pour éviter des perturbations mutuelles entre les images principale et secondaire.

Le dispositif de pointage secondaire peut comprendre divers éléments optiques tels que, notamment, un prisme ou un miroir plan. Une réalisation particulièrement simple et fiable est obtenue lorsque le dispositif de pointage secondaire est constitué par un miroir plan orienté de façon fixe par rapport au dispositif de pointage principal. En outre, un prisme tel que considéré dans le cadre de l'invention peut comprendre un bloc sensiblement transparent pourvu d'une face d'entrée, d'une face de sortie et d'une ou plusieurs faces réfléchissantes, et à l'intérieur duquel des rayons lumineux sont réfléchis selon un trajet défini entre la face d'entrée et la face de sortie.

Pour un système optique embarqué à bord d'un satellite, le système optique peut être entièrement fixe par rapport à la plateforme du satellite. Le dispositif de pointage principal est alors constitué par le miroir de pointage principal et par les systèmes d'orientation du satellite.

Alternativement, le miroir de pointage principal peut être mobile selon deux axes perpendiculaires. Un tel système est adapté pour effectuer un balayage de la direction d'observation, afin de couvrir un large champ d'observation.

Avantageusement, un dispositif de séparation est disposé à l'intérieur du télescope, de façon à séparer un faisceau de rayons dirigés par le dispositif de pointage secondaire vers l'entrée du télescope d'un faisceau de rayons sélectionnés par le dispositif de pointage principal. Un tel dispositif de séparation permet d'agencer facilement, au sein du télescope, l'ensemble de photodétecteurs destiné à la saisie de l'image secondaire, et un autre dispositif de photodétection pour enregistrer l'image correspondant à la direction d'observation.

Selon un perfectionnement de l'invention, le système optique comprend deux dispositifs de pointage secondaires disposés devant l'entrée du télescope et orientés chacun de façon fixe par rapport au dispositif de pointage principal, de sorte que des rayons dirigés par chacun d'eux vers l'entrée du télescope proviennent de directions respectives distinctes. L'ensemble de photodétecteurs est alors disposé pour enregistrer deux images formées chacune par une partie au moins du télescope à partir des rayons lumineux dirigés par l'un des dispositifs de pointage secondaires vers l'entrée du télescope. Une telle mise en oeuvre de deux dispositifs de pointage secondaires en combinaison avec le dispositif de pointage principal permet de déterminer la direction d'observation selon trois angles distincts par rapport à un repère inertiel. De cette façon, la direction d'observation est entièrement déterminée de façon unique.

Chacun des deux dispositifs de pointage secondaire peut comprendre soit un miroir plan, soit un prisme, pour diriger vers l'entrée du télescope des rayons lumineux provenant de la direction de pointage secondaire correspondante.

Dans le cas où plusieurs dispositifs de pointage secondaires sont utilisés, l'ensemble de photodétecteurs peut comprendre plusieurs matrices de photodétecteurs disposées pour enregistrer chacune une image formée par une partie au moins du télescope à partir des rayons lumineux dirigés par l'un des dispositifs de pointage secondaires vers l'entrée du télescope.

De préférence, les directions de provenance respectives des rayons dirigés par chacun des dispositifs de pointage secondaires vers l'entrée du télescope sont séparées d'un angle supérieur à 10 degrés. La direction d'observation peut alors être déterminée de façon particulièrement précise.

L'invention propose en outre un procédé mettant en oeuvre un système optique tel que décrit précédemment. Un tel procédé aboutit à des résultats et des interprétations particulièrement fiables grâce, notamment, à la connaissance précise de la direction des observations effectuées.

D'autres particularités et avantages de la présente invention apparaîtront dans la description ci-après d'un exemple de réalisation non limitatif, en référence aux dessins annexés, dans lesquels :
- la figure 1 représente un système optique selon l'invention ;
- la figure 2 illustre une utilisation possible d'un système optique selon l'invention ;
- la figure 3 est un diagramme fonctionnel d'un perfectionnement d'un système optique conforme à la figure 1 ; et
- les figures 4 à 6 illustrent un balayage réalisé au moyen d'un système optique selon l'invention, dans le cadre de l'utilisation de la figure 2.

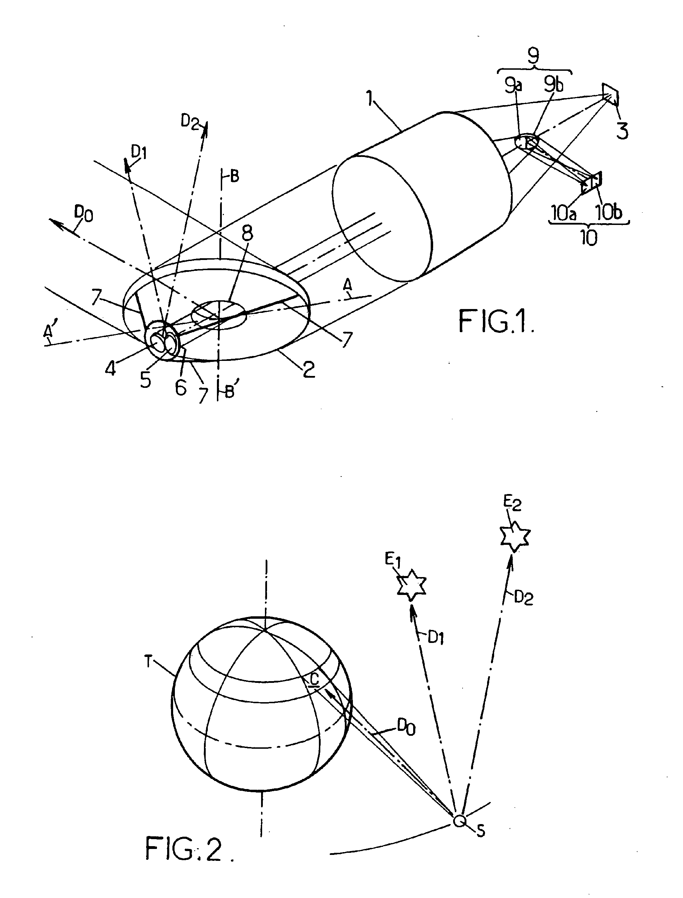

Pour raison de clarté, les dimensions des différents éléments représentés dans les figures 1, 2 et 4 ne correspondent pas à des dimensions réelles. En outre, des références identiques utilisées dans des figures distinctes correspondent à des éléments identiques ou ayant des fonctions identiques.

Conformément à la figure 1, un télescope 1 est équipé en entrée d'un dispositif de pointage. Le télescope 1 peut être de l'un des types connus de l'Homme du métier, par exemple du type à deux miroirs concaves et un miroir convexe. Il est représenté de façon simplifiée sous forme d'un cylindre, mais sa configuration réelle peut être différente, notamment lorsqu'elle est repliée. La référence 3 désigne le plan focal du télescope 1, en sortie de celui-ci.

Le dispositif de pointage est du type à miroir orientable. Il comprend un miroir plan 2 monté sur un support à deux axes perpendiculaires, d'un type connu et non représenté. A-A' et B-B' indiquent les deux axes d'orientation du miroir 2, pour une position déterminée de celui-ci. Pour cette position, des rayons lumineux provenant d'une direction D₀ sont réfléchis par le miroir 2 vers l'entrée du télescope 1. Ces rayons forment une image dans le plan focal 3. D₀ est appelée direction d'observation du système optique, le miroir 2 est appelé miroir de pointage principal et l'image correspondante dans le plan focal 3 est appelée image principale.

Deux miroirs secondaires, référencés 4 et 5, sont portés par un support 6 rigidement relié au miroir 2. Par exemple, le support 6 est tenu par trois tiges 7 fixées sur la circonférence du miroir 2. Les miroirs 4 et 5 sont plans, et peuvent être de dimensions réduites. Chacun de miroirs 4 et 5 réfléchit de la lumière provenant d'une direction secondaire vers l'entrée du télescope 1. Ainsi, D₁ est la direction de provenance des rayons lumineux entrant dans le télescope 1 après avoir été réfléchis par le miroir 4, et D₂ est la direction de provenance des rayons lumineux entrant dans le télescope 1 après avoir été réfléchis par le miroir 5. Les miroirs 4 et 5 constituent deux systèmes de pointage secondaires, dont les directions de pointage respectives sont D₁ et D₂. D₁ et D₂ sont appelées directions de pointage secondaires. Du fait de la liaison rigide entre le miroir 2 d'une part, et chacun des miroirs 4 et 5 d'autre part, les directions D₁ et D₂ sont distinctes de la direction D₀, mais conservent des orientations respectives constantes par rapport à D₀ lorsque le miroir 2 est tourné autour des axes A-A' et/ou B-B'. A titre d'exemple, D₁ et D₂ forment chacune avec D₀ un angle de 90°, et forment entre elles un angle de 60°.

Selon un agencement simple et peu encombrant, le miroir 2 peut présenter une ouverture, et chaque dispositif de pointage secondaire est disposé de sorte que les rayons dirigés par ce dispositif de pointage secondaire vers l'entrée du télescope traversent ladite ouverture. Ainsi, pour le système représenté, le miroir 2 possède une ouverture centrale 8 et les faisceaux de rayons lumineux réfléchis par chacun des miroirs 4 et 5 traversent l'ouverture 8 avant de pénétrer dans le télescope 1.

Afin de réduire la baisse de luminosité de l'image principale due à l'ouverture 8, les deux miroirs 4 et 5 peuvent être contigus sur le support 6. L'ouverture 8 peut alors être d'une taille relativement petite, tout en permettant le passage des faisceaux lumineux réfléchis respectivement par les miroirs 4 et 5. La disposition de l'ouverture 8 dans une partie centrale du miroir 2 n'est pas indispensable, mais elle contribue à réduire encore la baisse de luminosité de l'image principale.

Un dispositif de séparation 9 est disposé à l'intérieur du télescope 1 sur le trajet des rayons lumineux réfléchis par les miroirs 4 et 5. Il est disposé au niveau d'une pupille intermédiaire du système optique, qui peut être, par exemple, une image de l'ouverture 8 par une partie du télescope 1. Le dispositif de séparation 9 est de préférence fixe par rapport au télescope 1. Il est de dimension adaptée pour dévier les faisceaux de rayons issus des miroirs 4 et 5 quelque soit l'orientation du miroir 2, tout en détournant le moins possible de lumière réfléchie par le miroir 2. Dans le mode de réalisation particulier décrit ici, le dispositif de séparation 9 est composé de deux miroirs de séparation contigus, référencés 9a et 9b. Le miroir de séparation 9a est disposé pour réfléchir le faisceau de rayons issu du miroir secondaire 4, et le miroir de séparation 9b est disposé pour réfléchir le faisceau de rayons issu du miroir secondaire 5.

Deux matrices de photodétecteurs 10a et 10b sont placées dans des plans d'images respectifs conjugués avec le plan focal 3 par le dispositif de séparation 9. Elles constituent l'ensemble de photodétecteurs 10. Elles sont disposées pour recevoir respectivement les faisceaux de rayons réfléchis par les miroirs de séparation 9a et 9b. Eventuellement, des éléments d'optique supplémentaires peuvent être intercalés entre le dispositif de séparation 9 et les matrices 10a et 10b, notamment pour adapter l'ouverture des faisceaux lumineux, pour des raisons d'encombrement, ou pour améliorer la résolution d'acquisition d'image par les matrices 10a et 10b.

Les matrices de photodétecteurs 10a et 10b saisissent par conséquent des images respectives, qui correspondent chacune à l'une des directions de pointage secondaires D₁ et D₂. Elles peuvent être sensibles à de la lumière visible et/ou de la lumière infrarouge.

Le système optique peut comprendre en outre une unité (non représentée sur la figure 1) de commande du dispositif de pointage principal, adaptée pour réaliser un balayage de la direction d'observation D₀. Une telle unité peut comprendre deux moteurs, par exemple du type pas à pas, reliés au miroir 2 pour tourner celui-ci respectivement selon les axes A-A' et B-B'.

Alternativement, l'unité de commande peut contrôler les moteurs de façon à acquérir des images séparées correspondant chacune à une direction d'observation D₀ donnée.

Conformément à la figure 2, un tel système optique peut être utilisé pour une observation terrestre effectuée à partir d'un satellite. T désigne la Terre et la référence S se rapporte au satellite dans son ensemble. Le satellite S peut être géostationnaire, dédié à une observation météorologique par exemple. Le miroir 2 est orienté de sorte que la direction d'observation D₀ pointe vers un endroit déterminé à la surface de la Terre, où l'observation météorologique doit être effectuée. L'image formée dans le plan focal 3 correspond alors à une portion de la surface de la Terre, référencée C sur la figure 2.

L'image enregistrée par chaque matrice de photodétecteurs 10a, 10b comprend alors des points d'image conjugués avec des étoiles. Ces étoiles, référencées E₁ et E₂ sur la figure 2, sont situées dans les directions D₁ et D₂ par rapport au satellite S. Aux fins de l'observation terrestre ou météorologique, ces étoiles constituent des repères fixes permettant de définir un repère inertiel.

Lorsqu'un balayage d'une portion de la surface de la Terre est réalisé en commandant une variation progressive de la direction d'observation D₀, les directions D₁ et D₂ parcourent simultanément un balayage d'une portion du ciel. Autrement dit, lorsqu'un balayage de D₀ est effectué par rapport au repère inertiel, les directions de pointage secondaires D₁ et D₂ varient chacune en suivant l'évolution de D₀. Les matrices 10a et 10b saisissent alors des images qui correspondent chacune à une trace décrite dans le ciel par la direction D₁ ou par la direction D₂.

Dans le cas particulier d'un balayage de D₀ parallèle à la direction de l'Equateur, l'une des directions D₁ ou D₂ peut rester fixe par rapport au repère inertiel lorsque cette direction de pointage secondaire est parallèle à l'axe de rotation terrestre. Il s'agit en fait d'un balayage de cette direction de pointage secondaire qui est réduit à une rotation de la direction sur elle-même. Les images saisies successivement par la matrice de photodétecteurs correspondante se déduisent alors les unes des autres par rotation.

Selon un mode de mise en oeuvre préféré, au moins une portion d'image enregistrée par l'ensemble de photodétecteurs est comparée à une image de référence. Un résultat de la comparaison peut alors être utilisé de différentes façons. Par exemple, il peut être utilisé pour modifier un biais du télescope et/ou une attitude du satellite, ou encore pour corriger et/ou localiser une image d'observation obtenue à partir des rayons sélectionnés par le dispositif de pointage principal.

D'une façon particulièrement avantageuse, le résultat de la comparaison est utilisé pour modifier un réglage du dispositif de pointage principal. Ainsi, la direction d'observation D₀ est ajustée en fonction des images secondaires obtenues selon les directions D₁ et D₂.

Pour cela, le système optique comprend en outre un dispositif de comparaison d'une image enregistrée par l'ensemble de photodétecteurs 10 avec une image de référence. Il comprend aussi un dispositif d'asservissement (non représenté) du dispositif de pointage principal en fonction d'un résultat de ladite comparaison.

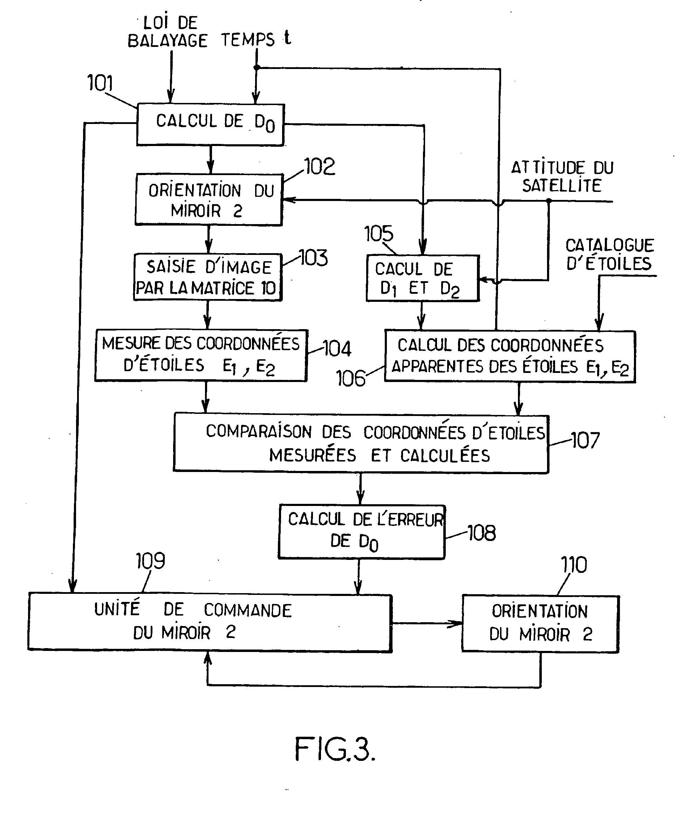

La figure 3 est un diagramme de fonctionnement simplifié d'un tel mode de réglage de l'orientation du miroir 2. Lors d'une première étape 101, des coordonnées initiales de la direction d'observation D₀ sont calculées à partir d'une loi de balayage enregistrée et d'une coordonnée temporelle notée t. Une orientation du miroir 2 est ensuite calculée à partir de l'attitude actuelle du satellite S, de façon à pointer dans la direction D₀ dont les coordonnées ont été calculées. Le miroir 2 est alors tourné jusqu'à obtenir cette orientation (étape 102) puis les matrices de photodétecteurs 10a et 10b sont activées pour saisir les images formées sur leurs surfaces à partir des rayons réfléchis par les miroirs 4 et 5 (étape 103). Des coordonnées d'étoiles E₁ et E₂, ou de groupes d'étoiles, sont alors mesurées sur les images saisies (étape 104).

Parallèlement, des coordonnées des directions D₁ et D₂ sont calculées à partir des coordonnées de la direction D₀ déterminées à l'étape 101 et de données d'attitude du satellite S (étape 105). Des coordonnées apparentes des étoiles E₁ et E₂ sont ensuite déterminées, à partir d'un catalogue d'étoiles repérées par leurs positions, de l'instant de saisie d'images de l'étape 103, et des coordonnées calculées des directions D₁ et D₂ (étape 106). Ces coordonnées apparentes calculées sont comparées aux coordonnées correspondantes mesurées sur les images saisies (étape 107). Une erreur de pointage est alors déduite de différences entre les coordonnées apparentes mesurées et calculées pour les étoiles E₁ et E₂ (étape 108).

Cette erreur de pointage est alors adressée à l'unité de commande du miroir 2, référencée 109 sur la figure 3, en même temps que les coordonnées calculées de la direction D₀. Elle est alors introduite dans la boucle de rétroaction qui permet de contrôler l'orientation du miroir 2, en étant combinée à des données fournies par des capteurs de position du miroir 2. L'erreur de pointage est ainsi automatiquement compensée lors de l'orientation du miroir 2 réalisée à l'étape 110. Toutefois, cette compensation peut être limitée par la précision des systèmes de pointages secondaires, ainsi que par les temps de réponse des dispositifs de pointage secondaires, de comparaison d'images et d'asservissement du miroir principal.

Selon ce mode de réglage du miroir 2, le dispositif de comparaison des images secondaires saisies par les matrices 10a et 10b est intégré en amont du dispositif d'asservissement de la position du miroir 2.

Lorsqu'une prise de vue isolée doit être réalisée par enregistrement d'une image principale formée dans le plan focal 3, cette image est enregistrée une fois que la boucle d'asservissement des étapes 109 et 110 a convergé et qu'une orientation définitive du miroir 2 est atteinte.

Lorsqu'un balayage doit être réalisé, le miroir 2 adopte des positions successives progressivement décalées. Il est alors possible de déterminer l'erreur de pointage lors d'une première position du miroir 2 pour laquelle une première image principale est saisie, et d'utiliser cette erreur de pointage pour ajuster une deuxième position du miroir 2, lors de laquelle une deuxième image principale est saisie. Les étapes 102 et 110 du diagramme de la figure 3 correspondent alors à deux positions successives du miroir 2 lors du balayage, associées chacune à une image principale saisie.

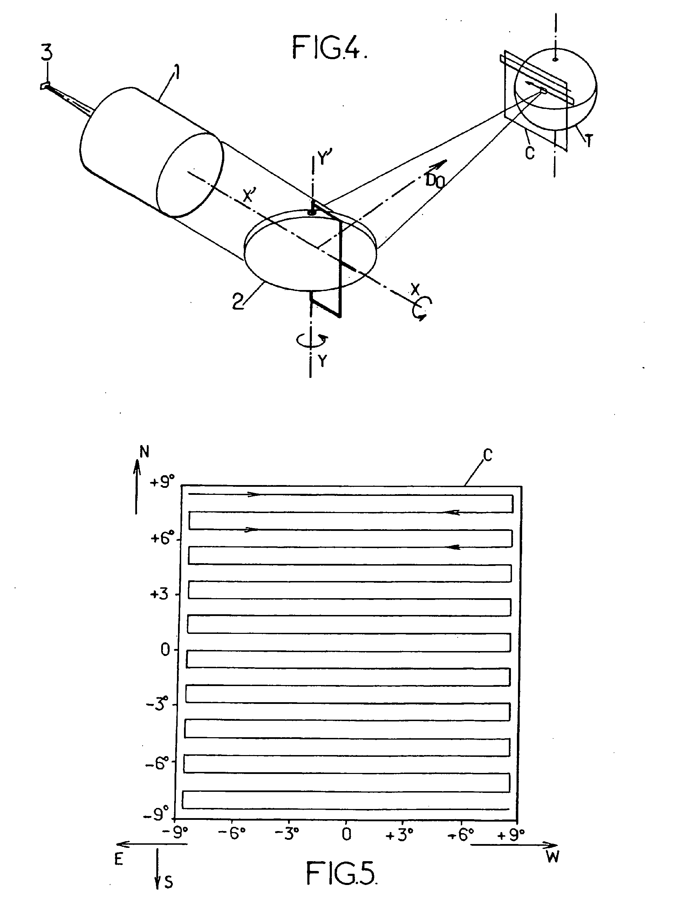

La figure 4 illustre une configuration particulière du dispositif de pointage principal, qui est adaptée pour effectuer un balayage, par la direction de pointage principal D₀, d'une portion C de la surface de la Terre selon des lignes parallèles à l'Equateur et décalées selon la direction du méridien local. Pour raison de clarté de la figure 4, les dispositifs de pointage secondaires 4 et 5 ne sont pas reproduits. Le miroir principal 2 peut être tourné selon un axe principal X'-X parallèle à l'axe optique du télescope 1, et selon un axe secondaire Y'-Y perpendiculaire à l'axe X'-X. Ainsi, une ligne du balayage est obtenue par rotation progressive du miroir 2 autour de l'axe Y'-Y, et le passage d'une ligne à la suivante est obtenu par rotation autour de l'axe X'-X. Le balayage résultant est représenté sur la figure 5. La portion C correspond à des variations de -9° à +9° de la direction D₀ selon les directions Est-Ouest (notées E et W sur la figure) et Sud-Nord (notées S et N), par rapport à un point central.

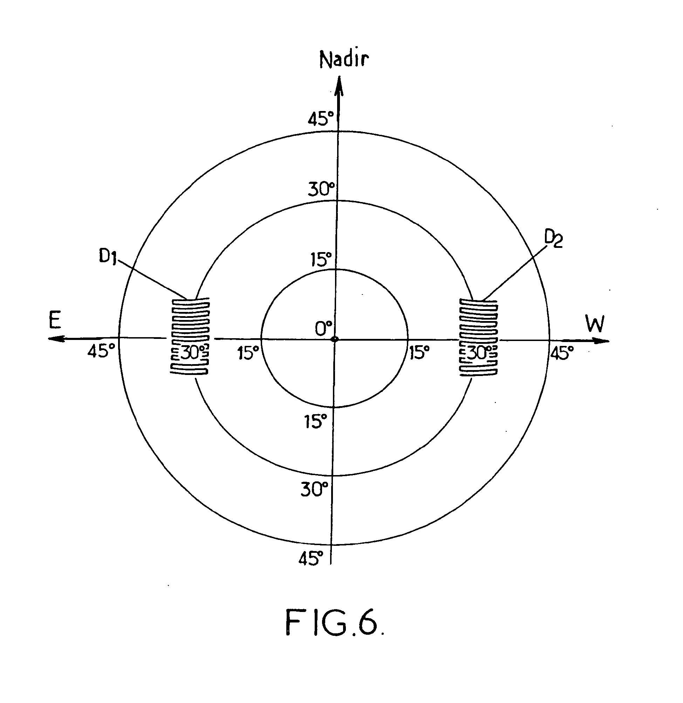

La figure 6 illustre les balayages décrits par les directions D₁ et D₂ pour deux systèmes de pointage secondaires analogues à ceux décrits en relation avec la figure 1. Elle correspond à une projection de la voûte céleste dans le plan équatorial terrestre. L'axe vertical est orienté vers le nadir, et l'axe horizontal est orienté de l'est vers l'ouest. On suppose que les deux directions D₁ et D₂ pointent de façon approximativement symétrique de part et d'autre de la direction du nord, correspondant à l'intersection des deux axes, respectivement vers l'est et vers l'ouest. Les traces représentées pour D₁ et D₂ sur la figure 6 correspondent à la trace de D₀ représentée sur la figure 5.

Il est entendu que de nombreuses modifications peuvent être introduites dans le mode de réalisation qui a été décrit en détail en référence à la figure 1. Parmi celles-ci, on peut citer notamment les modifications suivantes :
- le miroir principal 2 ne présente pas d'ouverture 8 et les miroirs secondaires 4 et 5 sont disposés de sorte que les rayons lumineux réfléchis par chacun d'eux vers l'entrée du télescope 1 passent à l'extérieur de la périphérie du miroir 2. Une telle configuration des dispositifs de pointage principal et secondaires est plus encombrante que celle décrite en détail mais ne provoque aucune baisse de luminosité de l'image principale. En particulier, les miroirs secondaires peuvent être fixés sur la périphérie du miroir principal ;
- chaque miroir secondaire 4, 5 peut être remplacé par un prisme, qui peut permettre, notamment, d'obtenir des positions relatives différentes des directions de pointage secondaires D₁ et D₂ par rapport à la direction d'observation D₀ ;
- le dispositif de séparation 9 est constitué d'un miroir unique disposé pour réfléchir tous les faisceaux de rayons issus des dispositifs de pointage secondaires ;
- les deux matrices de photodétecteurs 10a et 10b peuvent être remplacées par une matrice unique, notamment lorsque le dispositif de séparation 9 est constitué par un miroir unique. Dans ce cas, la matrice de photodétecteurs unique saisit une image composite, formée par la juxtaposition de deux portions d'images correspondant respectivement aux directions de pointage secondaires D₁ et D₂. Les deux portions d'images peuvent être séparées par un traitement informatique, notamment en fonction de la vitesse de déplacement de chaque point de l'image composite entre deux enregistrements successifs ; et
- le système optique peut comprendre des dispositifs de pointage secondaires en nombre pair ou impair en fonction du type de balayage envisagé. Pratiquement, ce nombre est de deux ou trois dispositifs de pointage secondaires. Un miroir de séparation distinct et une matrice de photodétecteurs distincte peuvent alors être associés à chaque dispositif de pointage secondaire.

Enfin, l'invention n'est pas limitée à l'application d'observation terrestre qui a été décrite. Elle peut aussi être utilisée pour d'autres applications, telles que, notamment, des relevés d'objets célestes ou l'orientation d'un terminal de transmission optique incorporant un télescope.

Le procédé d'ajustement de la direction d'observation correspondant à la figure 3 peut alors être adapté en fonction de contraintes particulières fixées par l'application concernée.

## Revendications

1. Système optique à pointage variable comprenant :
- un télescope (1) ;
- un dispositif de pointage principal (2) permettant de sélectionner des rayons lumineux provenant d'une direction d'observation déterminée (D₀) pour entrer dans le télescope, le dispositif de pointage principal (2) comprenant un miroir de pointage principal disposé devant l'entrée du télescope (1) et orientable, et la direction d'observation (D₀) étant sélectionnée en orientant le miroir de pointage principal de façon à réfléchir des rayons lumineux provenant de la direction d'observation (D₀) vers l'entrée du télescope (1) pour former une image principale ;
- au moins un dispositif de pointage secondaire (4, 5) disposé devant une partie de l'entrée du télescope (1) et orienté de façon fixe par rapport au dispositif de pointage principal (2), le dispositif de pointage secondaire étant en outre orienté de sorte que des rayons dirigés par le dispositif de pointage secondaire (4, 5) vers l'entrée du télescope (1) proviennent d'une direction (D₁, D₂) distincte de ladite direction d'observation (D₀) ; et
- au moins un ensemble de photodétecteurs (10) disposé pour enregistrer une image secondaire d'objets, formée par une partie au moins du télescope (1) à partir de rayons lumineux dirigés par le dispositif de pointage secondaire (4, 5) vers l'entrée du télescope,
le système étant **caractérisé en ce que** le dispositif de pointage secondaire (4, 5) est rigidement couplé au miroir de pointage principal (2) de façon à suivre ledit miroir de pointage principal lors d'un changement de direction d'observation (D₀) et à permettre de déterminer la direction d'observation (D₀) à partir de l'image secondaire d'objets.

2. Système selon la revendication 1, dans lequel le dispositif de pointage secondaire (4, 5) comprend un miroir plan.

3. Système selon la revendication 1, dans lequel le dispositif de pointage secondaire (4, 5) comprend un prisme.

4. Système selon l'une quelconque des revendications 1 à 3, dans lequel le miroir de pointage principal (2) présente une ouverture (8), et dans lequel le dispositif de pointage secondaire (4, 5) est disposé de sorte que les rayons dirigés par ledit dispositif de pointage secondaire vers l'entrée du télescope (1) traversent ladite ouverture.

5. Système selon l'une quelconque des revendications 1 à 4, comprenant en outre un dispositif de séparation (9) disposé à l'intérieur du télescope (1), de façon à séparer un faisceau de rayons dirigés par le dispositif de pointage secondaire (4, 5) vers l'entrée du télescope d'un faisceau de rayons sélectionnés par le dispositif de pointage principal (2).

6. Système selon l'une quelconque des revendications 1 à 5, comprenant deux dispositifs de pointage secondaires (4, 5) disposés devant l'entrée du télescope (1) et orientés chacun de façon fixe par rapport au dispositif de pointage principal (2), de sorte que des rayons dirigés par chacun des dispositifs de pointage secondaires (4, 5) vers l'entrée du télescope (1) proviennent de directions respectives distinctes (D₁, D₂),
l'ensemble de photodétecteurs (10) étant disposé pour enregistrer deux images formées chacune par une partie au moins du télescope (1) à partir des rayons lumineux dirigés par l'un des dispositifs de pointage secondaires (4, 5) vers l'entrée du télescope.

7. Système selon la revendication 6, dans lequel les directions de provenance respectives des rayons dirigés par chacun des dispositifs de pointage secondaires vers l'entrée du télescope (D₁, D₂) sont séparées d'un angle supérieur à 10 degrés.

8. Système selon la revendication 6 ou 7, dans lequel chaque dispositif de pointage secondaire (4, 5) comprend un miroir plan, et dans lequel les deux miroirs des dispositifs de pointage secondaires sont contigus.

9. Système selon la revendication 6 ou 7, dans lequel chaque dispositif de pointage secondaire comprend un prisme, et dans lequel les deux prismes des dispositifs de pointage secondaires sont contigus.

10. Système selon l'une quelconque des revendications 6 à 9, dans lequel l'ensemble de photodétecteurs comprend deux matrices de photodétecteurs (10a, 10b) disposées pour enregistrer chacune une image formée par une partie au moins du télescope (1) à partir des rayons lumineux dirigés par l'un des deux dispositifs de pointage secondaires (4, 5) vers l'entrée du télescope.

11. Système selon l'une quelconque des revendications 1 à 10, comprenant en outre une unité de commande du dispositif de pointage principal, adaptée pour réaliser un balayage de la direction d'observation (D₀).

12. Système selon l'une quelconque des revendications 1 à 11, comprenant en outre un dispositif de comparaison d'une image enregistrée par l'ensemble de photodétecteurs (10) avec une image de référence, et comprenant un dispositif d'asservissement du dispositif de pointage principal (2) en fonction d'un résultat de ladite comparaison.

13. Procédé mettant en oeuvre un système optique selon l'une quelconque des revendications 1 à 12.

14. Procédé selon la revendication 13, utilisé pour une observation terrestre effectuée à partir d'un satellite (S), et suivant lequel l'image enregistrée par l'ensemble de photodétecteurs (10) comprend des points d'image conjugués avec des étoiles (E₁, E₂).

15. Procédé selon la revendication 14, dans lequel le satellite (S) est géostationnaire.

16. Procédé selon la revendication 14 ou 15 ensemble la revendication 11, suivant lequel un balayage d'une portion (C) de la surface de la Terre (T) est réalisé en commandant une variation progressive de la direction d'observation (D₀), et suivant lequel les directions (D₁, D₂) de provenance des rayons dirigés par chaque dispositif de pointage secondaire (4, 5) vers l'entrée du télescope (1) parcourent simultanément un balayage d'une portion du ciel.

17. Procédé selon l'une quelconque des revendications 13 à 16, suivant lequel au moins une portion d'image enregistrée par l'ensemble de photodétecteurs (10) est comparée à une image de référence.

18. Procédé selon la revendication 17, suivant lequel un résultat de la comparaison est utilisé pour modifier un réglage du dispositif de pointage principal (2).

## Claims

1. Optical system with variable pointing comprising:
- a telescope (1);
- a principal pointing device (2) making it possible to select light rays originating from a particular direction of observation to enter the telescope, the principal pointing device (2) comprising a principal pointing mirror arranged ahead of the entrance of the telescope (1) and orientable, and the direction of observation (D₀) being selected by orienting the principal pointing mirror so as to reflect light rays originating from the direction of observation (D₀) toward the entrance of the telescope (1) for forming a principal image;
- at least one secondary pointing device (4, 5) arranged ahead of a part of the entrance of the telescope (1) and oriented fixedly with respect to the principal pointing device (2), the secondary pointing device furthermore being oriented so that rays directed by the secondary pointing device (4, 5) toward the entrance of the telescope (1) originate from a direction (D1, D2) distinct from said direction of observation (Do); and
- at least one set of photodetectors (10) arranged so as to record a secondary image of objects, formed by at least a part of the telescope (1) from light rays directed by the secondary pointing device (4, 5) toward the entrance of the telescope,
the system being **characterized in that** the secondary pointing device (4, 5) is rigidly coupled to the principal pointing mirror (2) so as to follow said principal pointing mirror during a change in the direction of observation (D₀) and make it possible to determine the direction of observation (D₀) from the secondary image of objects.

2. System according to Claim 1, wherein the secondary pointing device (4, 5) comprises a plane mirror.

3. System according to Claim 1, wherein the secondary pointing device (4, 5) comprises a prism.

4. System according to any one of claims 1 to 3, wherein the principal pointing mirror (2) has an aperture (8), and wherein the secondary pointing device (4, 5) is arranged so that the rays directed by said secondary pointing device toward the entrance of the telescope (1) pass through said aperture.

5. System according to any one of claims 1 to 4, furthermore comprising a separating device (9) arranged inside the telescope (1) so as to separate a beam of rays directed by the secondary pointing device (4, 5) toward the entrance of the telescope from a beam of rays selected by the principal pointing device (2).

6. System according to any one of claims 1 to 5, comprising two secondary pointing devices (4, 5) arranged ahead of the entrance of the telescope (1) and each oriented fixedly with respect to the principal pointing device (2), so that rays directed by each of the secondary pointing devices (4, 5) toward the entrance of the telescope (1) originate from separate respective directions,
the set of photodetectors (10) being arranged so as to record two images, each formed by at least a part of the telescope (1) from the light rays directed by one of the secondary pointing devices (4, 5) toward the entrance of the telescope.

7. System according to Claim 6, wherein the respective directions from which the rays directed by each of the secondary pointing devices toward the entrance of the telescope (D1, D2) originate are separated by an angle of greater than 10 degrees.

8. System according to Claim 6 or 7, wherein each secondary pointing device (4, 5) comprises a plane mirror, and wherein the two mirrors of the secondary pointing devices are adjacent each other.

9. System according to Claim 6 or 7, wherein each secondary pointing device comprises a prism, and in which the two prisms of the secondary pointing devices are adjacent each other.

10. System according to any one of claims 6 to 9, wherein the set of photodetectors comprises two matrices of photodetectors (10a, 10b) arranged so as to each record an image formed by at least a part of the telescope (1) on the basis of the light rays directed by one of the two secondary pointing devices (4, 5) toward the entrance of the telescope.

11. System according to any one of claims 1 to 10, furthermore comprising a principal pointing device control unit adapted so as to perform a scan of the direction of observation (D₀).

12. System according to any one of claims 1 to 11, furthermore comprising a device for comparing an image recorded by the set of photodetectors (10) with a reference image, and comprising a device for slaving the principal pointing device (2) as a function of a result of said comparison.

13. Method implementing an optical system according to any one of claims 1 to 12.

14. Method according to Claim 13, used for a terrestrial observation performed from a satellite (S), and wherein the image recorded by the set of photodetectors (10) comprises image points conjugated with stars (E₁, E₂) .

15. Method according to Claim 14, wherein the satellite (S) is geostationary.

16. Method according to Claim 14 or 15 together with Claim 11, wherein a scan of a portion (C) of the surface of the Earth is carried out by controlling a progressive variation of the direction of observation (Do), and wherein the directions (D₁, D₂) from which the rays directed by each secondary pointing device (4, 5) toward the entrance of the telescope (1) originate sweep simultaneously through a scan of a portion of the sky.

17. Method according to any one of claims 13 to 16, wherein at least one image portion recorded by the set of photodetectors (10) is compared with a reference image.

18. Method according to Claim 17, wherein a result of the comparison is used to modify a setting of the principal pointing device (2).

## Patentansprüche

1. Optisches System mit variabler Ausrichtung, umfassend:
- ein Teleskop (1)
- eine Hauptausrichtungsvorrichtung (2), welche es ermöglicht, von einer bestimmten Beobachtungsrichtung (D₀) stammende Lichtstrahlen auszuwählen, damit sie in das Teleskop einfallen, wobei die Hauptausrichtungsvorrichtung (2) einen Hauptausrichtungsspiegel umfasst, welcher vor dem Eingang des Teleskops (1) angeordnet ist und orientierbar ist, und wobei die Beobachtungsrichtung (D₀) ausgewählt wird durch Orientieren des Hauptausrichtungsspiegels mittels Reflektieren von aus der Beobachtungsrichtung (D₀) stammenden Lichtstrahlen zum Eingang des Teleskops (1) hin, um ein Hauptbild zu bilden;
- wenigstens eine Sekundärausrichtungsvorrichtung (4, 5), welche vor einem Teil des Eingangs des Teleskops (1) angeordnet ist und auf feste Art bezüglich der Hauptausrichtungsvorrichtung (2) orientiert ist, wobei die Sekundärausrichtungsvorrichtung ferner derart orientiert ist, dass durch die Sekundärausrichtungsvorrichtung (4, 5) zum Eingang des Teleskops (1) gerichtete Strahlen aus einer Richtung (D₁, D₂) stammen, welche unterschiedlich von der Beobachtungsrichtung (D₀) ist; und
- wenigstens einen Satz von Photodetektoren (10), der angeordnet ist zum Aufzeichnen eines Sekundärbildes von Objekten, das wenigstens teilweise vom Teleskop (1) gebildet ist ausgehend von Lichtstrahlen, die von der Sekundärausrichtungsvorrichtung (4, 5) zum Eingang des Teleskops gerichtet sind,
wobei das System **dadurch gekennzeichnet ist, dass** die Sekundärausrichtungsvorrichtung (4, 5) starr mit dem Hauptausrichtungsspiegel (2) gekoppelt ist, derart, dass sie dem Hauptausrichtungsspiegel folgt bei einer Veränderung der Beobachtungsrichtung (D₀) und dass sie es ermöglicht, die Beobachtungsrichtung (D₀) ausgehend vom Sekundärbild von Objekten zu bestimmen.

2. System nach Anspruch 1, bei dem die Sekundärausrichtungsvorrichtung (4, 5) einen ebenen Spiegel umfasst.

3. System nach Anspruch 1, bei dem die Sekundärausrichtungsvorrichtung (4, 5) ein Prisma umfasst.

4. System nach einem der Ansprüche 1 bis 3, bei dem der Hauptausrichtungsspiegel (2) eine Öffnung (8) aufweist und bei dem die Sekundärausrichtungsvorrichtung (4, 5) derart angeordnet ist, dass die durch die Sekundärausrichtungsvorrichtung zum Eingang des Teleskops (1) gerichteten Strahlen durch die Öffnung hindurchgehen.

5. System nach einem der Ansprüche 1 bis 4, ferner umfassend eine Trennungsvorrichtung (9), welche im Inneren des Teleskops (1) angeordnet ist, derart, dass sie ein Bündel von Strahlen, die durch die Sekundärausrichtungsvorrichtung (4, 5) zum Eingang des Teleskops gerichtet sind, von Strahlen trennt, welche durch die Hauptausrichtungsvorrichtung (2) ausgewählt sind.

6. System nach einem der Ansprüche 1 bis 5, umfassend zwei Sekundärausrichtungsvorrichtungen (4, 5), welche vor dem Eingang des Teleskops (1) angeordnet sind und jede bezüglich der Hauptausrichtungsvorrichtung (2) fest orientiert ist, derart, dass durch jede der Sekundärausrichtungsvorrichtungen (4, 5) zum Eingang des Teleskops (1) gerichtete Strahlen aus jeweils unterschiedlichen Richtungen (D₁, D₂) stammen, wobei der Satz von Photodetektoren (10) angeordnet ist, um zwei Bilder aufzuzeichnen, wobei jedes wenigstens teilweise vom Teleskop (1) ausgehend von Lichtstrahlen gebildet ist, welche durch eine der Sekundärausrichtungsvorrichtungen (4, 5) zum Eingang des Teleskops gerichtet sind.

7. System nach Anspruch 6, bei dem die jeweiligen Herkunftsrichtungen der durch jede Sekundärausrichtungsvorrichtung zum Eingang des Teleskops gerichteten Strahlen (D₁, D₂) mit einem Winkel von mehr als 10 Grad getrennt sind.

8. System nach Anspruch 6 oder 7, bei dem jede Sekundärausrichtungsvorrichtung (4, 5) einen ebenen Spiegel umfasst und bei dem die zwei Spiegel der Sekundärausrichtungsvorrichtungen benachbart sind.

9. System nach Anspruch 6 oder 7, bei dem jede Sekundärausrichtungsvorrichtung ein Prisma umfasst und bei dem die zwei Prismen der Sekundärausrichtungsvorrichtungen benachbart sind.

10. System nach einem der Ansprüche 6 bis 9, bei dem der Satz von Photodetektoren zwei Matrizen von Photodetektoren (10a, 10b) umfasst, die derart angeordnet sind, dass jede ein Bild aufzeichnet, das wenigstens teilweise vom Teleskop (1) gebildet ist ausgehend von Lichtstrahlen, die durch eine der zwei Sekundärausrichtungsvorrichtungen (4, 5) zum Eingang des Teleskops gerichtet sind.

11. System nach einem der Ansprüche 1 bis 10, ferner umfassend eine Steuereinheit der Hauptausrichtungsvorrichtung, die dazu eingerichtet ist, ein Abtasten der Beobachtungsrichtung (D₀) durchzuführen.

12. System nach einem der Ansprüche 1 bis 11, ferner umfassend eine Vorrichtung zum Vergleichen eines durch den Satz von Photodetektoren (10) aufgezeichneten Bildes mit einem Referenzbild, und umfassend eine Vorrichtung zur Steuerung der Hauptausrichtungsvorrichtung (2) in Funktion des Resultats des Vergleichs.

13. Verfahren, das ein optisches System nach einem der Ansprüche 1 bis 12 einsetzt.

14. Verfahren nach Anspruch 13, das für eine terrestrische Beobachtung verwendet wird, die ausgehend von einem Satelliten (S) ausgeführt wird, und gemäß dem das durch den Satz von Photodetektoren (10) aufgezeichnete Bild Bildpunkte umfasst, die Sternen (E₁, E₂) zugeordnet sind.

15. Verfahren nach Anspruch 14, bei dem der Satellit (S) geostationär ist.

16. Verfahren nach Anspruch 14 oder 15, rückbezogen auf Anspruch 11, bei dem ein Abtasten eines Abschnitts (C) der Erdoberfläche (T) durchgeführt wird, indem eine progressive Variation der Beobachtungsrichtung (D₀) bewirkt wird, und bei dem die Richtungen (D₁, D₂) der Herkunft von Strahlen, welche durch jede Sekundärausrichtungsvorrichtung (4, 5) zum Eingang des Teleskops (1) gerichtet sind, gleichzeitig ein Abtasten eines Abschnitts des Himmels durchlaufen.

17. Verfahren nach einem der Ansprüche 13 bis 16, beim dem wenigstens ein durch die Gruppe von Photodetektoren (10) aufgezeichneter Bildabschnitt mit einem Referenzbild verglichen wird.

18. Verfahren nach Anspruch 17, bei dem ein Resultat des Vergleichs verwendet wird, um eine Einstellung/Regelung der Hauptausrichtungsvorrichtung (2) zu ändern.
